## Europäisches Patentamt

## European Patent Office

## Office européen des brevets

(19)

(11) Veröffentlichungsnummer: **0 151 401**
**B1**

(12) # EUROPÄISCHE PATENTSCHRIFT

(45) Veröffentlichungstag der Patentschrift:
**18.10.89**

(21) Anmeldenummer: **85100297.2**

(22) Anmeldetag: **14.01.85**

(51) Int. Cl.⁴: **C 08 L 75/04, C 08 G 18/48**

(54) Harte, geschlossenzellige, flammfeste Polyurethanschaumstoffe.

(30) Priorität: **24.01.84 DE 3402310**

(43) Veröffentlichungstag der Anmeldung:
**14.08.85 Patentblatt 85/33**

(45) Bekanntmachung des Hinweises auf die Patenterteilung:
**18.10.89 Patentblatt 89/42**

(84) Benannte Vertragsstaaten:
**AT BE CH DE FR GB IT LI NL**

(56) Entgegenhaltungen:
**DE-A- 3 101 748**
**GB-A- 1 004 924**
**US-A- 3 767 602**

**"Advances in Polyurethane Technology", 1968, Seiten 187-203, MacLaren and Sons Ltd., London, GB.**

**Die Akte enthält technische Angaben, die nach dem Eingang der Anmeldung eingereicht wurden und die nicht in dieser Patentschrift enthalten sind.**

(73) Patentinhaber: **BAYER AG,**
**D-5090 Leverkusen 1 Bayerwerk (DE)**

(72) Erfinder: **Kapps, Manfred, Dr., Hoppersheiderweg 55,**
**D-5060 Bergisch-Gladbach 2 (DE)**
Erfinder: **Wiedermann, Rolf, Dr., Wiesenstrasse 18,**
**D-5068 Odenthal (DE)**
Erfinder: **Adam, Nobert, Dr., An der Ruthen 6,**
**D-5000 Köln 80 (DE)**
Erfinder: **Weigand, Eckehard, Dr., Menzlingen 4b,**
**D-5064 Rösrath (DE)**

ACTORUM AG

## Beschreibung

Harte, geschlossenzellige PU-Hartschaumstoffe mit einer Flammfestigkeit gemäß der Brandklasse B2 nach DIN 4102 haben durch Fortschritte der Normung steigende Bedeutung im Bauwesen gewonnen.

Von vielen Seiten sind seit Jahren Vorschläge zur Bereitstellung von flammwidrig eingestellten PU-Hartschaumstoffen gekommen.

Ein bekannter Lösungsvorschlag besteht in der Bereitstellung von PU-Schaumstoffen mit Polyisocyanuratstrukturen. Derartige Strukturen sind dann nachweisbar, wenn mit mehr als 1,5 Äquivalenten Isocyanat pro Äquivalent Hydroxyl (d.h. mit einer Kennzahl über 150) in Gegenwart von Trimerisationskatalysatoren gearbeitet wird.

Derartige Schaumstoffe sind in der Praxis nicht allgemein eingeführt, da sie häufig spröde sind und wegen der Temperaturempfindlichkeit bei der Herstellung nicht auf allen Anlagen hergestellt werden können.

Ein anderer Weg zur Bereitstellung von flammwidrigen PU-Hartschaumstoffen besteht in der Mitverwendung von Flammschutzmitteln bei der PU-Schaumstoffherstellung.

Man unterscheidet üblicherweise einbaufähige und nicht einbaufähige Flammschutzmittel (FS). Die Verwendung der letztgenannten in größeren Mengen führt zu schlechten Schaumstoffeigenschaften; einbaufähige FS sind häufig niedrigfunktionell und machen den Schaumstoff weich; höherfunktionelle ergeben hohe Viskositäten, welche Schwierigkeiten bei der Schaumstoffherstellung schaffen.

Die DE-OS 3 101 748 beschreibt z.B. die Zusammenhänge zwischen Gehalt an Flammschutzmittel und Brandverhalten einerseits und Flammschutzmittel, Hydroxylzahl und Aushärtung andererseits.

Ziel der vorliegenden Erfindung war, diese Nachteile unter Einsatz von an sich bekannten Ausgangsprodukten unter Mitverwendung einer relativ geringen Menge an konventionellen Flammschutzmitteln zu überwinden.

Gegenstand der Erfindung sind harte, geschlossenzellige flammfeste Polyurethan-Schaumstoffe, erhältlich durch Umsetzung von Polyisocyanaten mit höhermolekularen Polyolen, in Gegenwart von Flammschutzmitteln, organischen Treibmitteln, Vernetzungsmitteln, Katalysatoren und Wasser, dadurch gekennzeichnet, daß man ein Polyolgemisch, bestehend aus

a) 25–43 Gew.-% von konventionellen Flammschutzmitteln,

b) 5–50 Gew.-% von Zuckerpolyethern einer OH-Zahl von 350 bis 550,

c) 0–30 Gew.-% von amingestarteten Polyethern einer OH-Zahl von 400 bis 800,

d) 0–30 Gew.-% von weiteren Polyethern oder Polyestern einer OH-Zahl von 150 bis 600,

e) 4–13 Gew.-% Glycerin,

f) 0,5–3 Gew.-% eines Siliconstabilisators und

g) 0,05–1,5 Gew.-% Wasser,

mit einem Polyphenyl-polymethylen-polyisocyanat, das 30 bis 49 Gew.-% an 4,4'- und 2,4'-Diphenylmethandiisocyanat enthält bei einer Kennzahl von 107 bis 145 umsetzt, dadurch gekennzeichnet, daß ein Katalysatorgemisch, bestehend aus tertiären Aminen, Alkali- oder quaternären Ammoniumcarboxylaten und organischen Zinnverbindungen eingesetzt wird. Vorzugsweise beträgt die Kennzahl 111 bis 135.

Für die Herstellung der erfindungsgemäßen Schaumstoffe wird ein Polyphenyl-polymethylen-polyisocyanat verwendet, wie es durch Anilin-Formaldehyd-Kondensation und anschließende Phosgenierung erhalten wird («rohes MDI», welches einen Gehalt von 4,4'- und 2,4'-Diphenylmethandiisocyanat (einen «Zweikerngehalt») von 30 bis 49 Gew.-%, aufweist, verwendet. Diese Polyisocyanat-Komponente wird mit dem obengenannten Polyolgemisch umgesetzt, wobei die Schaumstoffbildung erfolgt.

Die im Polyolgemisch enthaltenen konventionellen Flammschutzmittel stellen einbaufähige oder nicht-einbaufähige Produkte dar. Diese Flammschutzmittel sind an sich bekannt; beispielsweise seien genannt: Tris-chlorethylphosphat, Diphenylkresylphosphat, Trikresylphosphat oder Ammoniumphosphat und -polyphosphat, Phosphonsäureester wie Methylphosphonsäuredimethylester oder Ester wie sie z.B. nach DOS 2 750 555 erhalten werden oder Dibrombutendiopolyether, wie sie nach DOS 2 323 702 oder DOS 2 445 571 erhältlich sind, ferner Phosphorsäureester, wie sie nach DE-AS 1 181 411 bekannt geworden sind.

Erfindungsgemäß ist bevorzugt, daß das Flammschutzmittel eine Phosphor- und/oder Halogen-haltige Verbindung darstellt.

Die im Polyolgemisch enthaltenen Zuckerpolyether einer OH-Zahl von 350 bis 550 sind ebenfalls an sich bekannt und werden in bekannter Weise durch Umsetzung von Saccharose mit Alkylenoxiden, wie Propylenoxid und/oder Ethylenoxid, erhalten. Derartige Zuckerpolyether sind z.B. in den DE-A 1 176 358 und 1 064 938 beschrieben.

Auch die amingestarteten Polyether einer OH-Zahl von 400 bis 800 sind an sich bekannt. Sie werden z.B. durch Anlagerung von Epoxiden wie Propylenoxid und/oder Ethylenoxid an Amine wie Ammoniak, Anilin, Toluylendiamin, Ethanolamin oder Ethylendiamin erhalten.

Die im Polyolgemisch gegebenenfalls enthaltenen weiteren Polyether oder Polyester einer OH-Zahl von 150 bis 600 stellen ebenfalls konventionelle Produkte dar. Polyether werden bekanntlich durch Anlagerung von Alkylenoxiden wie Propylenoxid und/oder Ethylenoxid an niedermolekulare Verbindungen mit reaktionsfähigen Wasserstoffatomen wie Wasser oder Alkohole oder aber durch Polymerisation der Epoxide mit sich selbst, z.B. in Gegenwart von Lewis-Katalysatoren wie $BF_3$ erhalten. Die erfindungsgemäß in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren.

Als Vernetzungsmittel enthält das Polyolgemisch Glycerin.

Die im Polyolgemisch enthaltenen Silikon-Stabilisatoren sind Schaumstabilisatoren der bekannten Art. Insbesondere kommen Polyethersiloxane in Betracht. Diese Verbindungen sind im allgemeinen so aufgebaut, daß ein Copolymerisat aus Ethylenoxid und Propylenoxid mit einem Polydimethylsiloxanrest verbunden ist. Erfindungsgemäß kommen aber auch Silikon-Schaumstabilisatoren mit davon unterschiedlicher Struktur in Frage, z.B. solche, die keinen Polyetheranteil enthalten.

Das Polyolgemisch enthält Wasser, das als Treibmittel wirkt. Zusätzlich werden organische Treibmittel wie halogensubstituierte Alkane, z.B. Methylenchlorid, Chloroform, Ethylidenchlorid, Vinylidenchlorid, Monofluortrichlormethan, Chlordifluormethan, Dichlordifluormethan in der Regel in einer Menge von 10–50 Gew.-%, bezogen auf das Polyolgemisch, mitverwendet. Weitere Beispiele für evtl. mitzuverwendende Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

Erfindungsgemäß wird ein Katalysatorgemisch, bestehend aus tertiären Aminen, Alkalicarboxylaten oder Ammonium carboxylaten und organischen Zinnverbinbindungen, verwendet.

Beispiele für tertiäre Amine sind: Triethylamin, Tributylamin, N-Methyl-morpholin, N-Ethylmorpholin, N,N,N',N'-Tetramethyl-ethylendiamin, Pentamethyl-diethylentriamin und höhere Homologe (DE-A 2 624 527 und 2 624 528), 1,4-Diazabicyclo-(2,2,2)-octan, N-Methyl-N'-dimethylamino-ethyl-piperazin, Bis-(dimethylaminoalkyl)-piperazine (DE-A 2 636 787), N,N-Dimethylbenzylamin, N,N-Dimethylcyclohexylamin, N,N-Diethylbenzylamin, Bis-(N,N-diethylaminoethyl)-adipat, N,N,-N',N'-Tetramethyl-1,3-butandiamin, N,N-Dimethyl-β-phenylethylamin, 1,2-Dimethylimidazol, 2-Methylimidazol, monocyclische und bicyclische Amidine (DE-A 1 720 633), Bis-(dialkylamino)alkylether (US-Patentschrift 3 330 782, DE-Auslegeschrift 1 030 558, DE-A 1 804 361 und 2 618 280) sowie Amidgruppen (vorzugsweise Formamidgruppen) aufweisende tertiäre Amine gemäß den DE-A 2 523 633 und 2 732 292).

Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundär-tertiäre Amine gemäß DE-A 2 732 292.

Beispiele für Alkalicarboxylate sind: Kaliumacetat und -octoat, Natriumacetat und -octoat. Beispiele für quaternäre Ammoniumcarboxylate sind: Trimethyl-benzyl-ammoniumacetat, sowie solche Verbindungen, wie sie aus DE-OS 2 631 733 bekannt geworden sind.

Als organische Zinnverbindungen seien beispielsweise genannt: schwefelhaltige Verbindungen wie Di-n-octylzinn-mercaptid (DE-A 1 769 367; US-P 3 645 927), Zinn(II)-salze von Carbonsäuren wie Zinn(II)-acetat, Zinn(II)-octoat, Zinn(II)-ethylhexoat und Zinn(II)-laurat, Zinn(IV)-Verbindungen wie Dibutylzinnoxid, Dibutylzinndichlorid, Dibutylzinndiacetat, Dibutylzinndilaurat, Dibutylzinnmaleat oder Dioctylzinndiacetat.

Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Das Katalysatorengemisch wird in der Regel in einer Menge zwischen etwa 0,2 und 3 Gew.-%, bezogen auf die Polyolmischung, eingesetzt.

Für sich allein genommen weisen die Katalysatoren des Katalysatorgemisches Nachteile auf, z.B. wird anhand von Vergleichsbeispielen gezeigt, daß die alleinige Verwendung eines tertiären Amins ungenügende Brandeigenschaften des erhaltenen Schaumstoffs ergibt.

Erfindungsgemäß können ferner bei der Schaumstoffherstellung Stabilisatoren gegen Alterungs- und Witterungseinflüsse, Weichmacher und fungistatisch und bakteriostatisch wirkende Substanzen sowie Füllstoffe wie Bariumsulfat, Kieselgut, Ruß oder Schlämmkreide mitverwendet verwenden.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter «overcharging» gearbeitet; eine derartige Verfahrensweise ist z.B. aus den US-Patentschriften 3 178 490 und 3 182 104 bekannt.

Bei der Formverschäumung werden vielfach an sich bekannte «äußere Trennmittel», wie Silikonöle, mitverwendet. Man kann aber auch sogenannte «innere Trennmittel», gegebenenfalls im Gemisch mit äußeren Trennmitteln, verwenden, wie sie z.B. aus den DE-Offenlegungsschriften 2 121 670 und 2 307 589 bekanntgeworden sind.

Selbstverständlich können aber auch Schaumstoffe durch Blockverschäumung oder nach dem an sich bekannten Doppeltransportbandverfahren hergestellt sowie nach Ortschaumverfahren direkt am Einsatzort gegossen, überschichtet oder aufgespritzt werden.

Die erfindungsgemäßen Schaumstoffe finden z.B. folgende Anwendungen:

Dachdämmplatten, Fassadenelemente, Fußbodenelemente, Isolierung von Behältern, Pipelines usw., Dichten und Dämmen von Dächern und Wänden usw.

Die nachfolgend beschriebenen Beispiele sollen die Erfindung näher erläutern, ohne sie jedoch einzuschränken.

Beispiel 1
Eine Polyolmischung bestehend aus
33,3 Gew.-% Zucker/Propylenglykol-Propylenoxid-Polyether (OH-Zahl 470, mit ca. 17 Gew.-% Propylenglykol-PO-Polyether)
16,6 Gew.-% Ethylendiamin-Propylenoxid-Polyether (OH-Zahl 630)
10,0 Gew.-% Glycerin
10,0 Gew.-% Polyol der OH-Zahl 440 auf Basis eines Phosphonsäureesters (12,2% P) (Flammschutzmittel gemäß DE-OS 2 750 555)
8,1 Gew.-% Dibrombutendiol-Epichlorhydrin-Polyether (OH-Zahl 330, 32% Br, 6,8% Cl) (Flammschutzmittel)
20,0 Gew.-% Diphenyl-Kresyl-Phosphat (Flammschutzmittel)
0,6 Gew.-% Triethylphosphat (Flammschutzmittel)
1,3 Gew.-% Silikonstabilisator (OS 710 der BAYER AG, Leverkusen)
0,1 Gew.-% Wasser
wurden entsprechend den Beispielen 1A bis 1F auf einer handelsüblichen Doppeltransportbandanlage verschäumt.

Die Beispiele 1A bis 1F zeigen die Überlegenheit der Schaumstoffe im Sinne der Erfindung im Hinblick auf das Brandverhalten gegenüber der Verschäumung mit reiner Aminaktivierung (Beispiel 1D), gegenüber der Verschäumung bei niedriger Kennzahl (Beispiel 1E) und gegenüber der Verschäumung mit erhöhtem Gehalt an 2,4'- und 4,4'-Diphenylmethandiisocyanat im MDI (Beispiel 1F). GT = Gewichtsteile

| Beispiele | 1A* | | 1B | | 1C | | 1D* | | 1E* | | 1F* | |
|---|---|---|---|---|---|---|---|---|---|---|---|---|
| Polyolmischung | 100 | GT | 100 | GT | 100 | GT | 100 | GT | 100 | GT | 100 | GT |
| Monofluortrichlormethan | 34 | GT | 34 | GT | 34 | GT | 34 | GT | 32 | GT | 34 | GT |
| Dimethylcyclohexylamin | 1,6 | GT | 0,3 | GT | 0,3 | GT | 3,2 | GT | 1,6 | GT | 1,6 | GT |
| Dimethyletanolamin | – | GT | 0,3 | GT | 0,3 | GT | – | GT | – | GT | – | GT |
| Dibutylzinndilaurat | 0,03 | GT | 0,06 | GT | 0,06 | GT | – | GT | 0,03 | GT | 0,03 | GT |
| Kaliumacetat | – | GT | 0,02 | GT | 0,02 | GT | – | GT | – | GT | – | GT |
| Diethylenglykol | – | GT | 0,7 | GT | 0,7 | GT | – | GT | – | GT | – | GT |
| rohes MDI mit ca. 40% 2,4'- und 4,4'-Diphenylmethandiisocyanat | 145 | GT | 145 | GT | 160 | GT | 145 | GT | 130 | GT | – | GT |
| rohes MDI mit 55 Gew.-% 2,4'- und 4,4'-Diphenylmethandiisocyanat | – | GT | – | GT | – | GT | – | GT | – | GT | 145 | GT |
| Kennzahl | 116 | | 116 | | 128 | | 116 | | 104 | | 116 | |
| Brandverhalten nach DIN 4102 | B2 | | B2 | | B2 | | B3 | | B3 | | B3 | |
| Flammenhöhe (mm) | 145 | | 130 | | 140 | | > 150 | | > 150 | | > 150 | |
| Abbindezeit (sec) auf Hochdruck-Maschinen | 23 | | 25 | | 25 | | 24 | | 24 | | 24 | |
| Rohdichte (kg/m³) in der Platte | 37 | | 37 | | 38 | | 38 | | 38 | | 36 | |

* Vergleichsbeispiele

## Patentansprüche

1. Harte, geschlossenzellige, flammfeste Polyurethan-Schaumstoffe, erhältlich durch Umsetzung von Polyisocyanaten mit höhermolekularen Polyolen in Gegenwart von Flammschutzmitteln, organischen Treibmitteln, Vernetzungsmitteln, Katalysatoren und Wasser, wobei man ein Polyolgemisch, bestehend aus

a) 25–43 Gew.-% von konventionellen Flammschutzmitteln,

b) 5–50 Gew.-% von Zuckerpolyethern einer OH-Zahl von 350 bis 550,

c) 0–30 Gew.-% von amingestarteten Polyethern einer OH-Zahl von 400 bis 800,

d) 0–30 Gew.-% von weiteren Polyethern oder Polyestern einer OH-Zahl von 150 bis 600,

e) 4–13 Gew.-% Glycerin,

f) 0,5–3 Gew.-% eines Silikonstabiliators und

g) 0,05–1,5 Gew.-% Wasser,

mit einem Polyphenyl-polymethylen-polyisocyanat, das 30 bis 49 Gew.-% an 4,4'- und 2,4'-Diphenylmethandiisocyanat enthält, bei einer Kennzahl von 107 bis 145 umsetzt, dadurch gekennzeichnet, daß ein Katalysatorgemisch, bestehend aus tertiären Aminen, Alkali- oder quaternären Ammoniumcarboxylaten und organischen Zinnverbindungen, eingesetzt wird.

2. Polyurethan-Schaumstoffe nach Anspruch 1, dadurch gekennzeichnet, daß das Flammschutzmittel eine Phosphor- und/oder Halogen-haltige Verbindung darstellt.

3. Polyurethanschaumstoffe nach Anspruch 1 und 2, dadurch gekennzeichnet, daß die Kennzahl 111 bis 135 beträgt.

## Claims

1. Rigid, closed-cell, flameproof polyurethane foams obtainable by reaction of polyisocyanates with relatively high molecular eight polyols in the presence of flameproofing agents, organic blowing agent, crosslinking agents, catalysts and water, a polyol mixture consisting of

a) 25–43% by weight conventional flameproofing agents,

b) 5–50% by weight sugar polyethers having an OH value of 350 to 550,

c) 0–30% by weight amine-started polyethers having an OH value of 400 to 800,

d) 0–30% by weight other polyethers or polyesters having an OH value of 150 to 600,

e) 4–13% by weight glycerol,

f) 0.5–3% by weight of a silicone stabilizer and

g) 0.05–1.5% by weight water,

being reacted with a polyphenyl-polymethylene polyisocyanate containing 30 to 49% by weight 4,4'- und 2,4'-diphenylmethane diisocyanate at an NCO index of 107 to 145, characterized in that a catalyst mixture consisting of tertiary amines, alkali or quaternary ammonium carboxylates and organotin compounds is used.

2. Polyurethane foams as claimed in claim 1, characterized in that the flameproofing agent is a phosphorus- and/or halogen-containing compound.

3. Polyurethane foams as claimed in claims 1 and 2, characterized in that the index is from 111 to 135.

## Revendications

1. Mousses de polyuréthanes dures à cellules fermées et ignifuges, que l'on peut obtenir en faisant réagir des polyisocyanates avec des polyols de poids moléculaire très élevé en présence d'agents ignifuges, d'agents gonflants organiques, d'agents de réticulation, de catalyseurs et d'eau, en faisant réagir, à un indice caractéristique de 107 à 145, un mélange de polyols comprenant:

a) 25–43% en poid d'agents ignifuges conventionnels,

b) 5–50% en poids de polyéthers de sucre d'un indice OH de 350 à 550,

c) 0–30% en poids de polyéthers formés au départ d'amines et ayant un indice OH de 400 à 800,

d) 0–30% en poids d'autres polyéthers ou polyesters d'un indice OH de 150 à 600,

e) 4–13% en poids de glycérol,

f) 0,5–3% en poids d'un stabilisant de silicone, et

g) 0,05–1,5% en poids d'eau,

avec un polyisocyanate de polyphényl-polyméthylène contenant 30 à 49% en poids de 4,4'- et de 2,4'-diphénylméthane-diisocyanate, caractérisées en ce qu'on utilise un mélange de catalyseurs constitué d'amines tertiaires, de carboxylates de métaux alcalins ou d'ammonium quaternaire et de composés organiques d'étain.

2. Mousses de polyuréthanes selon la revendication 1, caractérisées en ce que l'agent ignifuge est un composé contenant du phosphore et/ou un halogène.

3. Mousses de polyuréthanes selon les revendications 1 et 2, caractérisées en ce que l'indice caractéristique est de 111 à 135.